# EUROPEAN PATENT SPECIFICATION

(11) **EP 4 163 497 B1**
(45) Date of publication and mention of the grant of the patent: **09.09.2026**
(21) Application number: 21201025.0
(22) Date of filing: 05.10.2021
(51) Int. Cl.: F04D 19/02, F04D 25/06, B64C 11/00, H02K 16/02, H02K 21/12, B64D 27/24, H02K 1/32, H02K 9/06

(54) **MULTI-STAGED AXIAL COMPRESSOR PROPULSION MOTOR FOR AN ELECTRIC PROPULSION AIRCRAFT**
MEHRSTUFIGER AXIALKOMPRESSORANTRIEBSMOTOR FÜR EIN FLUGZEUG MIT ELEKTROANTRIEB
MOTEUR DE PROPULSION À COMPRESSEUR AXIAL À ÉTAGES MULTIPLES POUR UN AÉRONEF À PROPULSION ÉLECTRIQUE

(43) Date of publication of application: 12.04.2023
(73) Proprietor: Archer Aviation Inc., San Jose, CA 95134 (US)
(72) Inventor: WEBER, Florian, 85354 Freising (DE)
(74) Representative: Finnegan Europe LLP

(56) References cited:
- FR-A1- 3 094 955
- US-A- 3 101 917

## Description

The present invention relates to a multi-staged axial compressor propulsion motor for an electric propulsion aircraft.

It has been known to use one-stage compressors as propulsion means for aircraft, for example in the form of so-called "ducted fans", in which a compressor stage with a plurality of blades is driven to rotate within a cylindrical housing in order to create thrust along its longitudinal axis.

During operation of such compressors, due to the geometrical shape and rotating movement of the single stage of blades, a cross-flow and a parasitic transverse impulse is created by the compressor stage. Thus, in known one-stage compressors of the above described kind, in addition to the desired impulse in the longitudinal direction, its single compressor stage also produces a parasitic transverse impulse in the driven air stream due to the rotation of its blades, which is noticeable as a twist in the discharge air stream. Thus, in order to guide the resulting airflow in a suitable manner in the longitudinal direction and avoid the formation of cross-flows, stator or guide vanes have to be installed downstream of the compressor stage inside the housing in the direction of the driven airflow acting as baffle plates.

However, the installation of such static guide elements within the compressor housing and thus in the driven airflow necessarily leads to losses generated during its operation as the transverse impulse component is absorbed in the stator vanes. In other words, by balancing out said twist of the produced airflow by means of static elements therein, the relative thrust in the longitudinal direction and thus the efficiency of the compressor is reduced. Also, the guide vanes representing lossy flow obstacles in the airflow can only be designed for a specific load point due to their static nature and could only be dynamically adapted for a larger load range with much increased complexity and thus cost, while their static nature on the other hand further decreases the efficiency of the compressor over a wide range of operational parameters.

In this context, reference shall be made to document FR 3 094 955 A1, in which a multi-staged axial compressor propulsion motor for an electrical propulsion aircraft is disclosed, which comprises a housing, two compressor stages and an electrical drive assembly adapted to drive the two compressor stages in a counter-rotating manner. For the sake of completeness, reference shall furthermore be made to document US 3,101,917 A.

It is therefore the object of the present invention to provide an improved axial compressor propulsion motor for an electrical propulsion aircraft, in which the drawbacks of the prior art discussed above are overcome.

According to the present invention, for this purpose a multi-staged axial compressor propulsion motor is proposed, comprising a housing, defining a substantially cylindrical inner space and a longitudinal axis, at least two compressor stages arranged in the inner space of the housing in a rotatable manner one behind the other along the longitudinal axis, wherein each compressor stage comprises an inner blade ring and an outer blade ring with a plurality of blades extending between the inner and outer blade rings, and an electrical drive assembly adapted to drive at least two of the compressor stages in a counter-rotating manner.

Thus, in the axial compressor propulsion motor according to the present invention, at least two counter-rotating compressor stages are arranged one behind the other and electrically driven in a counter-rotating manner. This design allows to adapt the two or more axial compressor stages concerning their geometrical and propulsion properties in such a way that the angular momentum induced in the air stream by the rotation of the individual compressor stages is zero or close to zero at the outlet of the last compressor stage. This makes a guide vane ring or other static elements within the airflow inside the housing obsolete and eliminates the frictional losses of static elements such as guide vane rings. Furthermore, the overall efficiency of the propulsion motor is further improved as the second and further compressor stages are operating at an already increased air-pressure level due to the pre-compression provided by the at least one compressor stage positioned upstream in the airflow direction.

In some possible embodiments of the present invention, the blades of the at least two compressor stages may be tilted or bent with respect to the longitudinal axis of the housing in opposite directions. By adapting this feature, the noise level created during operation of the propulsion motor can be reduced, since the area of maximum convergence between two counter-rotating rotor blades can be vastly reduced from a more or less line-shaped segment along the radial direction of the individual pairs of blades of the compressor stages when approaching each other to a more point-like area traveling along the radial blade length while the two blades pass each other during counter-rotation. Thus, a siren effect of two rotor blades meeting each other as well as possible compression shocks can be reduced, resulting in a substantial reduction of noise created during operation of the propulsion motor. While different shapes and designs of such tilted blades are conceivable, said blades may for example be sickle-shaped or inclined with respect to one another.

While the concrete layout of the individual compressor stages concerning the arrangement of the blades can be chosen according to various boundary conditions, such as desired thrust and correspondingly required rotations per minute of the compressor stages of the propulsion motor, while achieving a uniform airflow with a thrust direction along the longitudinal axis of the housing, in some embodiments, the at least two compressor stages may be provided with an identical number of blades and/or the blades of the at least two compressor stages may be tilted with respect to the longitudinal axis by the same amount. By adapting the compressor stages in such a manner, a high degree of symmetry between the stages is achieved which facilitates construction and operation of the propulsion motor and reduces asymmetrical effects such as torques or forces acting in an undesired manner.

In order to further improve the airflow within the housing and further eliminate static or quasi-static elements therein, the outer blade ring of at least one of the compressor stages may be aligned with a cylindrical inner wall surface of the housing. Thus, the corresponding outer blade ring is embedded in a respective slot or recession of the inner wall of the cylindrical housing and its aerodynamic resistance is minimized.

According to the present invention, the axial compressor propulsion motor comprises a design in which the outer blade ring of a first compressor stage is supported on the housing by means of a first bearing assembly, for example by means of a ball bearing, and a second compressor stage comprises an inner axle section, wherein a second bearing assembly is provided, supporting the inner axle section on the first compressor stage. Thus, a floating arrangement of the compressor stages is achieved which on the one hand further minimizes static elements positioned in the airflow path within the housing thus reducing aerodynamic drag, while on the other hand, frictional losses may also be reduced in the bearing assemblies.

In this context, a hub section may be centrally arranged in a fixed manner in the inner space of the housing and the inner axle section may extend within the hub section.

Also in In this context, the first compressor stage in its outer blade ring may be provided with at least two pairs of permanent magnets, each pair arranged in opposite magnetic direction, in order to provide for the possibility to electrically drive said compressor stage by means of alternating magnetic fields produced by a suitable electro-magnet arrangement in the proximity thereof.

Furthermore, the second compressor stage in its outer blade ring may be provided with two radial layers of ferritic material, wherein each of the two radial layers forms a flush rear face in the longitudinal direction, and each layer forms at least two tabs opposite the rear face, thus facing the first compressor stage.

In such embodiments, a gap may be formed in the second compressor stage between the two radial layers of ferritic material in order to allow an improved cooling of active components of the propulsion motor by means of air flowing or being led through said gap.

As a means to drive the at least two compressor stages in a counter-rotating manner, the electrical drive assembly may comprise an electro-magnet assembly positioned adjacent to the second compressor stage and comprising a coil with a two-sided armature, wherein each of the sides faces a respective one of the two radial layers of the second compressor stage, as well as drive electronics, which are arranged to provide the coil with an electric current in order to induce an alternating magnetic field in the armature for driving the second compressor stage in rotation.

Thus, a floating, counter-rotating electrical motor to drive the two compressor stages by the rotationally symmetrical induction of the magnetic field into the ferritic layers of the second compressor stage may be achieved, which reduces the complexity of the motor as well as of the drive electronics. In this context, said drive electronics may for example comprise a H-bridge switching assembly for selectively energizing the coil in such an embodiment.

In order to make optimal use of the space available in the propulsion motor according to the invention, the drive electronics may at least partially be integrated in the housing, which can also contribute to facilitating their cooling due to compressed air flowing in their vicinity during operation of the motor as well as outside the housing during flight of the aircraft.

Furthermore, the propulsion motor according to the invention may further comprise a positioning sensor system adapted to periodically determine the angular position and/or angular velocity of at least one of the compressor stages, preferably each compressor stage, such that the positions of the permanent magnets relative to one another may be evaluated and feedback may be provided to the drive electronics for achieving optimal efficiency and operating conditions of the drive electronics as well as overall motor at all times.

In order to improve and facilitate cooling of active components of the propulsion motor according to the present invention, at least some of the blades of at least one of the compressor stages may be provided with internal air ducts extending towards a radially outer side. By providing such radially extending air-guiding means, a constant overpressure airflow for cooling motor components is provided in a radial direction and the outer ring blade of the compressor may be guided on an air film. Furthermore, this design choice helps preventing dust or other particles from ingressing through the gaps between the outer blade rings of the compressors and/or the housing components.

According to a second aspect, the present invention relates to an aircraft with a fuselage and at least one pair of wings, further provided with at least one multi-staged compressor propulsion motor according to the present invention, wherein the at least one multi-staged compressor propulsion motor may be integrated with a flap element, which is pivotably mounted to one of the wings. Such a design of an electrical propulsion aircraft offers high efficiency combined with advanced control features, in particular since the prevention of transverse impulse components of the propulsion motors according to the invention facilitates the pivoting of such flaps with respect to the wings and/or fuselage of the aircraft.

Further features and advantages of the present invention will become even clearer from the following description of an embodiment thereof, when taken together with the accompanying drawing, which in particular illustrate:
- Fig. 1: a schematic view visualizing the working principle of a propulsion motor according to the present invention;
- Fig. 2: a schematic cross-sectional view of an embodiment of the propulsion motor according to the present invention;
- Fig. 3: a cross-sectional view along the plane denoted A-A in Fig. 2;
- Fig. 4: a cross-sectional view along the plane denoted B-B in Fig. 2;
- Fig. 5: a cross-sectional view along the plane denoted C-C in Fig. 2; and
- Fig. 6: a front view of the blades of one of the compressor stages shown in Fig. 2.

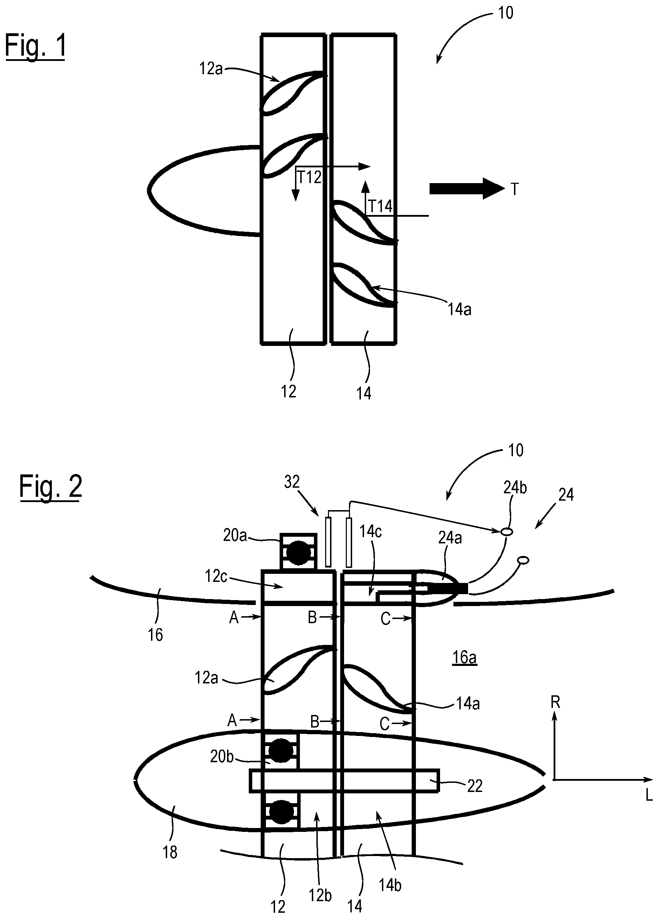

In Fig. 1, a multi-staged axial compressor propulsion motor according to the present invention is shown in a schematic manner for visualizing its working principle and generally denoted by reference numeral 10.

The propulsion motor 10 comprises a first compressor stage 12 and a second compressor stage 14, which are each provided with a plurality of blades 12a and 14a, respectively. By driving the two compressor stages 12 and 14 in a counter-rotating manner, the individual thrust components T12 and T14 provided by the respective compressor stages 12 and 14 add up in such a manner that an overall thrust T is produced, in which all components directed perpendicularly to the longitudinal direction L of the propulsion motor 10 are substantially canceled out.

Thus, by operating the propulsion motor with its two compressor stages 12 and 14 rotating in two opposite directions, unwanted cross-flows produced by each individual compressor stage 12 and 14 can be compensated for without the use of static guide vanes which would increase aerodynamic drag and reduce the overall efficiency of the propulsion motor 12. Hence, by automatically compensating for the internal cross-flows of the compressor stages 12 and 14, a highly efficient propulsion motor can be provided, in which due to its symmetrical design, torque and momentum perpendicular to its longitudinal direction R and direction of thrust can be minimized.

Fig. 2 shows a schematic cross-section view of the propulsion motor 10 in which further components are shown. In particular, the propulsion motor 10 comprises a housing 16 with a substantially cylindrical inner space 16a around the longitudinal axis L. Said inner space 16a serves as a flow duct for the air to be compressed by the compressor stages 12 and 14, such that the propulsion motor 10 is of the ducted-fan type.

Furthermore, the propulsion motor 10 may comprise a hub section 18, which is centrally arranged in a fixed manner in the inner space 16a of the housing 16. It can furthermore be seen in Fig. 2 that each of the two compressor stages 12 and 14 in addition to its blades 12a and 14a extending along a radial direction R also comprises an inner blade ring 12b, 14b, as well as an outer blade ring 12c, 14c, respectively. Said outer blade rings 12c, 14c are aligned with the cylindrical inner wall surface of the housing 14, such that the outer blade rings 12c and 14c are accommodated in a recession 16b of the housing.

Furthermore, it is shown in Fig. 2 that the outer blade ring 12c of the first compressor stage 12 is supported on the housing 16 by means of a first bearing assembly 20a and that the second compressor stage 14 comprises an inner axle section 22, a second bearing assembly 20b is provided, supporting the inner axle section 22 on the first compressor stage 12. Thus, a floating arrangement of the two compressor stages 12 and 14 is achieved, which reduces friction losses and facilitates its electrical operation as will be discussed further below. The inner axle section 22 may extend within the hub section 18.

Referring back to Fig. 2, said figure furthermore shows an electrical drive assembly 24 positioned adjacent to the second compressor stage 14 and comprising a coil 24a with a two-sided armature, as well as drive electronics 24b, which are shown only schematically but may for example comprise an H-bridge switching assembly for selectively energizing the coil 24a. In order to be able to establish a control method for the operation of the drive electronics 24b, the propulsion motor 10 further comprises a positioning sensor system 32 adapted to periodically determine the angular position and/or angular velocity of each compressor stage 12, 14, and which is coupled to the drive electronics 24b to provide corresponding data.

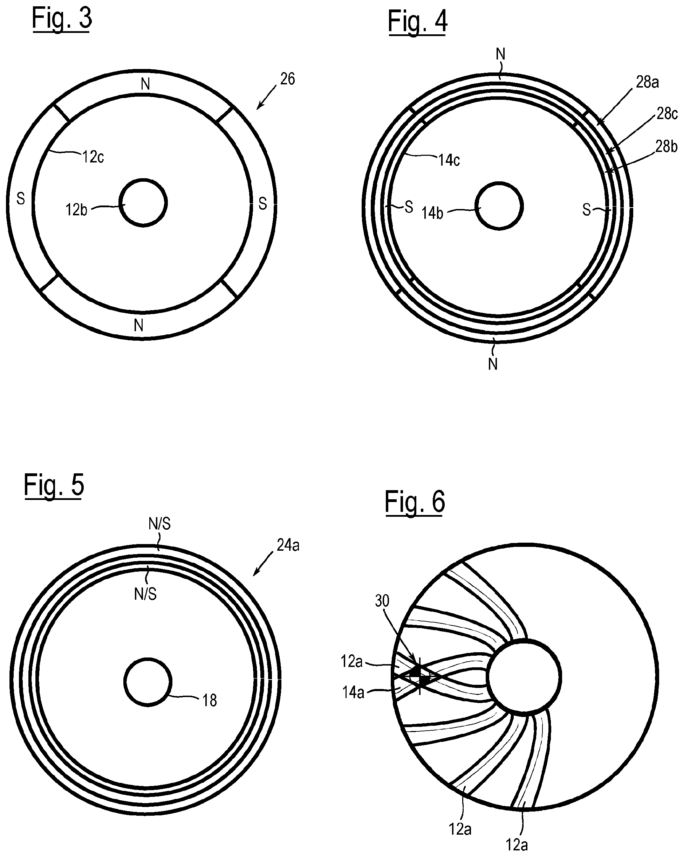

Reference shall now be made to Figs. 3 to 5, which show the outer blade rings 12c and 14c as well as the electro-magnet 24a in respective cross-sectional views along the planes A-A, B-B and C-C denoted in Fig. 2, respectively.

In Fig. 3, the outer blade ring 12c of the first compressor stage 12 is shown to comprise two pairs of permanent magnets 26, wherein each pair is arranged in an opposite magnetic direction.

In contrast, Fig. 4 shows the outer blade ring 14c of the second compressor stage 14, which is provided with two radial layers 28a and 28b of ferritic material with permanent-magnet properties, stapled in a radial direction of the compressor stage 14, with a gap 28c formed there between. Each of the two radial layers 28a and 28b forms a flush rear end face in the longitudinal direction R and each layer forms at least two tabs opposite its rear face, thus facing the first compressor stage, as can be seen in Fig. 2.

Fig. 5 now shows the radially arranged electromagnet 24a adjacent to the back of the second compressor stage 14 in the longitudinal direction R with its two-sided armature, wherein each of the sides faces a respective one of the two radial layers 28a and 28b of the second compressor stage 14 as just discussed in the context of Fig. 4. As denoted by "N/S" in Fig. 4, depending on the current flowing through the electromagnet at a given time, a corresponding magnetic field is produced therein. Thus, by means of the drive electronics 24b, the radially arranged electro-magnet 24a provides a rotationally symmetrical induction of the magnetic field into the ferritic layers 28a and 28b of the second compressor stage 14, independent from the rotational position of said compressor stage 14, thus allowing an electrically driven rotation of the first and second compressor stages 12 and 14 in a counter-rotating manner.

Lastly, reference shall be made to Fig. 6, which in a front view shows the blades 12a of the first compressor stage 12 as well as a single blade 14a of the second compressor stage 14, from which it becomes obvious that the blades 12a and 14a are tilted with respect to the longitudinal axis R in opposite directions and are sickle-shaped or inclined.

As can be seen in Fig. 6, the region of overlap 30 between the blade 12a of the first compressor stage 12 and blade 14a of the second compressor stage 14 is reduced as compared to possible embodiments in which the blades are extending straight in the radial direction R. Thus, the region of overlap 30 between the two rotor blades 12a and 14a during their counter-rotating movement travels along the blade length, while the two blades pass each other. Thus, a siren effect or compressor shocks during operation of the propulsion motor 10 may be reduced, such that the operation thereof will produce less noise than the briefly mentioned possible embodiment with blades extending straight in the radial direction R.

## Claims

1. Multi-staged axial compressor propulsion motor (10) for an electrical propulsion aircraft, comprising:
- a housing (16), defining a substantially cylindrical inner space (16a) and a longitudinal axis (L);
- at least two compressor stages (12, 14) arranged in the inner space (16a) of the housing (16) in a rotatable manner one behind the other along the longitudinal axis (L),
wherein each compressor stage (12, 14) comprises an inner blade ring (12b, 14b) and an outer blade ring (12c, 14c) with a plurality of blades (12a, 14a) extending between the inner (12b, 14b) and outer (12c, 14c) blade rings; and
- an electrical drive assembly (24) adapted to drive at least two of the compressor stages (12, 14) in a counter-rotating manner,
**characterized in that**
the outer blade ring (12c) of a first compressor stage (12) is supported on the housing (16) by means of a first bearing assembly (20a), a second compressor stage (14) comprises an inner axle section (22), and
a second bearing assembly (20b) is provided, supporting the inner axle section (22) on the first compressor stage (12),
thereby, a floating arrangement of the compressor stages is achieved.

2. Multi-staged axial compressor propulsion motor (10) according to claim 1, wherein the blades (12a, 14a) of the at least two compressor stages (12, 14) are tilted or bent with respect to the longitudinal axis (L) in opposite directions.

3. Multi-staged axial compressor propulsion motor (10) according to claim 1 or 2,
wherein the at least two compressor stages (12, 14) are provided with an identical number of blades (12a, 14a) and/or the blades (12a, 14a) of the at least two compressor stages (12, 14) are tilted with respect to the longitudinal axis (L) by a same amount

4. Multi-staged axial compressor propulsion motor (10) according to any of the preceding claims,
wherein the outer blade ring (12c, 14c) of at least one of the compressor stages (12, 14) is aligned with a cylindrical inner wall surface of the housing (16).

5. Multi-staged axial compressor propulsion motor (10) according to any of the preceding claims, further comprising a hub section (18), centrally arranged in a fixed manner in the inner space (16a) of the housing (16) and wherein the inner axle section (22) extends within the hub section (18).

6. Multi-staged axial compressor propulsion motor (10) according to any of the preceding claims,
wherein the first compressor stage (12) in its outer blade ring (12c) is provided with at least two pairs of permanent magnets (26), each pair arranged in opposite magnetic direction.

7. Multi-staged axial compressor propulsion motor (10) according to any of the preceding claims,
wherein the second compressor stage (14) in its outer blade ring (14c) is provided with two radial layers (28a, 28b) of ferritic material,
wherein each of the two radial layers (28a, 28b) forms a flush rear face in the longitudinal direction (L), and
each layer forms at least two tabs opposite the rear face, thus facing the first compressor stage (12).

8. Multi-staged axial compressor propulsion motor (10) according to claim 7, wherein a gap (28c) is formed in the second compressor stage (14) between the two radial layers (28a, 28b) of ferritic material.

9. Multi-staged axial compressor propulsion motor (10) according to claim 7 or 8,
wherein the electrical drive assembly (24) comprises an electromagnet assembly positioned adjacent to the second compressor stage (14) and comprising:
- a coil (24a) with a two-sided armature, wherein each of the sides faces a respective one of the two radial layers (28a, 28b) of the second compressor stage (14); and
- drive electronics (24b), which are arranged to provide the coil (24a) with an electric current in order to induce an alternating magnetic field in the armature for driving the second compressor stage (14) in rotation.

10. Multi-staged axial compressor propulsion motor (10) according to claim 9, wherein the drive electronics (24b) comprise an H-bridge switching assembly for selectively energizing the coil (24a).

11. Multi-staged axial compressor propulsion motor (10) according to any of the preceding claims,
wherein the drive electronics (24b) are at least partially integrated in the housing (16).

12. Multi-staged axial compressor propulsion motor (10) according to any of the preceding claims,
further comprising a positioning sensor system (32) adapted to periodically determine the angular position and/or angular velocity of at least one of the compressor stages (12, 14), preferably each compressor stage.

13. Multi-staged axial compressor propulsion motor (10) according to any of the preceding claims,
wherein at least some of the blades (12a, 14a) of at least one of the compressor stages (12, 14) are provided with internal air ducts extending towards a radially outer side.

14. Aircraft with a fuselage and at least one pair of wings, further provided with a least one multi-staged compressor propulsion motor (10) according to any of the preceding claims, wherein in particular the at least one multi-staged compressor propulsion motor is integrated with a flap element which is pivotably mounted to one of the wings.

## Patentansprüche

1. Mehrstufiger Axialkompressorantriebsmotor (10) für ein Flugzeug mit Elektroantrieb, umfassend:
- ein Gehäuse (16), das einen im Wesentlichen zylindrischen Innenraum (16a) und eine Längsachse (L) definiert;
- mindestens zwei Kompressorstufen (12, 14), die in dem Innenraum (16a) des Gehäuses (16) in drehbarer Weise hintereinander entlang der Längsachse (L) angeordnet sind, wobei jede Kompressorstufe (12, 14) einen inneren Schaufelkranz (12b, 14b) und einen äußeren Schaufelkranz (12c, 14c) mit einer Vielzahl von Schaufeln (12a, 14a) umfasst, die sich zwischen dem inneren (12b, 14b) und dem äußeren (12c, 14c) Schaufelkranz erstrecken; und
- eine elektrische Antriebsanordnung (24), die angepasst ist, um mindestens zwei der Kompressorstufen (12, 14) in einer gegenläufigen Weise anzutreiben,
**dadurch gekennzeichnet, dass**
der äußere Schaufelkranz (12c) einer ersten Kompressorstufe (12) mittels einer ersten Lageranordnung (20a) an dem Gehäuse (16) abgestützt ist, eine zweite Kompressorstufe (14) einen inneren Achsabschnitt (22) umfasst und
eine zweite Lageranordnung (20b) bereitgestellt ist, die den inneren Achsabschnitt (22) an der ersten Kompressorstufe (12) abstützt, wodurch eine schwimmende Anordnung der Kompressorstufen erreicht wird.

2. Mehrstufiger Axialkompressorantriebsmotor (10) nach Anspruch 1,
wobei die Schaufeln (12a, 14a) der mindestens zwei Kompressorstufen (12, 14) in Bezug auf die Längsachse (L) in entgegengesetzte Richtungen geneigt oder gebogen sind.

3. Mehrstufiger Axialkompressorantriebsmotor (10) nach Anspruch 1 oder 2,
wobei die mindestens zwei Kompressorstufen (12, 14) mit einer identischen Anzahl von Schaufeln (12a, 14a) versehen sind und/oder die Schaufeln (12a, 14a) der mindestens zwei Kompressorstufen (12, 14) in Bezug auf die Längsachse (L) um den gleichen Betrag geneigt sind.

4. Mehrstufiger Axialkompressorantriebsmotor (10) nach einem der vorhergehenden Ansprüche,
wobei der äußere Schaufelkranz (12c, 14c) von mindestens einer der Kompressorstufen (12, 14) mit einer zylindrischen Innenwandfläche des Gehäuses (16) ausgerichtet ist.

5. Mehrstufiger Axialkompressorantriebsmotor (10) nach einem der vorhergehenden Ansprüche, ferner umfassend einen Nabenabschnitt (18), der zentral in einer festen Weise in dem Innenraum (16a) des Gehäuses (16) angeordnet ist und wobei sich der innere Achsabschnitt (22) innerhalb des Nabenabschnitts (18) erstreckt.

6. Mehrstufiger Axialkompressorantriebsmotor (10) nach einem der vorhergehenden Ansprüche,
wobei die erste Kompressorstufe (12) in ihrem äußeren Schaufelkranz (12c) mit mindestens zwei Paaren von Permanentmagneten (26) versehen ist, wobei jedes Paar in entgegengesetzter magnetischer Richtung angeordnet sind.

7. Mehrstufiger Axialkompressorantriebsmotor (10) nach einem der vorhergehenden Ansprüche,
wobei die zweite Kompressorstufe (14) in ihrem äußeren Schaufelkranz (14c) mit zwei radialen Schichten (28a, 28b) aus ferritischem Material versehen ist,
wobei jede der zwei radialen Schichten (28a, 28b) eine bündige Rückseite in Längsrichtung (L) bildet, und
jede Schicht mindestens zwei Laschen bildet, die der Rückseite gegenüberliegen und somit der ersten Kompressorstufe (12) zugewandt sind.

8. Mehrstufiger Axialkompressorantriebsmotor (10) nach Anspruch 7, wobei in der zweiten Kompressorstufe (14) zwischen den zwei radialen Schichten (28a, 28b) aus ferritischem Material ein Spalt (28c) ausgebildet ist.

9. Mehrstufiger Axialkompressorantriebsmotor (10) nach Anspruch 7 oder 8,
wobei die elektrische Antriebsanordnung (24) eine Elektromagnetanordnung umfasst, die angrenzend an die zweite Kompressorstufe (14) positioniert ist und Folgendes umfasst:
- eine Spule (24a) mit einem zweiseitigen Anker, wobei jede der Seiten einer jeweiligen der beiden radialen Schichten (28a, 28b) der zweiten Kompressorstufe (14) zugewandt ist; und
- Antriebselektronik (24b), die angeordnet ist, um die Spule (24a) mit einem elektrischen Strom zu versorgen, um ein magnetisches Wechselfeld in dem Anker zu induzieren, um die zweite Kompressorstufe (14) in Drehung zu versetzen.

10. Mehrstufiger Axialkompressorantriebsmotor (10) nach Anspruch 9,
wobei die Antriebselektronik (24b) eine H-Brücken-Schaltanordnung zum selektiven Erregen der Spule (24a) umfasst.

11. Mehrstufiger Axialkompressorantriebsmotor (10) nach einem der vorhergehenden Ansprüche,
wobei die Antriebselektronik (24b) zumindest teilweise in dem Gehäuse (16) integriert ist.

12. Mehrstufiger Axialkompressorantriebsmotor (10) nach einem der vorhergehenden Ansprüche,
ferner umfassend ein Positionierungssensorsystem (32), das angepasst ist, um die Winkelposition und/oder Winkelgeschwindigkeit von mindestens einer der Kompressorstufen (12, 14), vorzugsweise jeder Kompressorstufe, periodisch zu bestimmen.

13. Mehrstufiger Axialkompressorantriebsmotor (10) nach einem der vorhergehenden Ansprüche,
wobei zumindest einige der Schaufeln (12a, 14a) von mindestens einer der Kompressorstufen (12, 14) mit internen Luftkanälen versehen sind, die sich in Richtung einer radial äußeren Seite erstrecken.

14. Flugzeug mit einem Rumpf und mindestens einem Paar von Flügeln, ferner versehen mit mindestens einem mehrstufigen Kompressorantriebsmotor (10) nach einem der vorhergehenden Ansprüche, wobei insbesondere der mindestens eine mehrstufige Kompressorantriebsmotor mit ein Klappenelement integriert ist, das schwenkbar an einem der Flügel montiert ist.

## Revendications

1. Moteur de propulsion à compresseur axial à étages multiples (10) pour un aéronef à propulsion électrique, comprenant :
- un carter (16), définissant un espace intérieur sensiblement cylindrique (16a) et un axe longitudinal (L) ;
- au moins deux étages de compresseur (12, 14) disposés dans l'espace intérieur (16a) du carter (16) de manière rotative l'un derrière l'autre suivant l'axe longitudinal (L),
dans lequel chaque étage de compresseur (12, 14) comprend une virole intérieure d'aubes (12b, 14b) et une virole extérieure d'aubes (12c, 14c) avec une pluralité d'aubes (12a, 14a) s'étendant entre les viroles intérieure (12b, 14b) et extérieure (12c, 14c) d'aubes ; et
- un ensemble d'entraînement électrique (24) adapté pour entraîner au moins deux des étages de compresseur (12, 14) d'une manière contrarotative,
**caractérisé en ce que**
la virole extérieure d'aubes (12c) d'un premier étage de compresseur (12) est supportée sur le carter (16) au moyen d'un premier ensemble de palier (20a),
un deuxième étage de compresseur (14) comprend une section d'essieu intérieure (22), et
un second ensemble de palier (20b) est prévu, supportant la section d'essieu intérieure (22) sur le premier étage de compresseur (12),
ce qui permet ainsi d'obtenir un agencement flottant des étages de compresseur.

2. Moteur de propulsion à compresseur axial à étages multiples (10) selon la revendication 1,
dans lequel les aubes (12a, 14a) des au moins deux étages de compresseur (12, 14) sont inclinées ou fléchies par rapport à l'axe longitudinal (L) dans des directions opposées.

3. Moteur de propulsion à compresseur axial à étages multiples (10) selon la revendication 1 ou 2,
dans lequel les au moins deux étages de compresseur (12, 14) sont munis d'un nombre identique d'aubes (12a, 14a) et/ou les aubes (12a, 14a) des au moins deux étages de compresseur (12, 14) sont inclinées par rapport à l'axe longitudinal (L) d'une même mesure.

4. Moteur de propulsion à compresseur axial à étages multiples (10) selon l'une quelconque des revendications précédentes,
dans lequel la virole extérieure d'aubes (12c, 14c) d'au moins l'un des étages de compresseur (12, 14) est alignée avec une surface de paroi intérieure cylindrique du carter (16).

5. Moteur de propulsion à compresseur axial à étages multiples (10) selon l'une quelconque des revendications précédentes, comprenant en outre une section de moyeu (18), agencée centralement de manière fixe dans l'espace intérieur (16a) du carter (16) et dans lequel la section d'essieu intérieure (22) s'étend à l'intérieur de la section de moyeu (18).

6. Moteur de propulsion à compresseur axial à étages multiples (10) selon l'une quelconque des revendications précédentes,
dans lequel le premier étage de compresseur (12) dans sa virole extérieure d'aubes (12c) est pourvu d'au moins deux paires d'aimants permanents (26), chaque paire étant agencée dans une direction magnétique opposée.

7. Moteur de propulsion à compresseur axial à étages multiples (10) selon l'une quelconque des revendications précédentes,
dans lequel le deuxième étage de compresseur (14) dans sa virole extérieure d'aubes (14c) est pourvu de deux couches radiales (28a, 28b) de matériau ferritique,
dans lequel chacune des deux couches radiales (28a, 28b) forme une face arrière affleurante dans la direction longitudinale (L), et
chaque couche forme au moins deux pattes opposées à la face arrière, faisant ainsi face au premier étage de compresseur (12).

8. Moteur de propulsion à compresseur axial à étages multiples (10) selon la revendication 7, dans lequel un espace (28c) est formé dans le deuxième étage de compresseur (14) entre les deux couches radiales (28a, 28b) de matériau ferritique.

9. Moteur de propulsion à compresseur axial à étages multiples (10) selon la revendication 7 ou 8,
dans lequel l'ensemble d'entraînement électrique (24) comprend un ensemble d'électroaimants positionné adjacent au deuxième étage de compresseur (14) et comprenant :
- une bobine (24a) avec une armature à deux côtés, dans laquelle chacun des côtés fait face à l'une respective des deux couches radiales (28a, 28b) du deuxième étage de compresseur (14) ; et
- des composants électroniques d'entraînement (24b), qui sont agencés pour fournir à la bobine (24a) un courant électrique afin d'induire un champ magnétique alternatif dans l'armature pour entraîner le deuxième étage de compresseur (14) en rotation.

10. Moteur de propulsion à compresseur axial à étages multiples (10) selon la revendication 9,
dans lequel les composants électroniques d'entraînement (24b) comprennent un ensemble de commutation en pont en H pour exciter sélectivement la bobine (24a).

11. Moteur de propulsion à compresseur axial à étages multiples (10) selon l'une quelconque des revendications précédentes,
dans lequel les composants électroniques d'entraînement (24b) sont au moins partiellement intégrés dans le carter (16).

12. Moteur de propulsion à compresseur axial à étages multiples (10) selon l'une quelconque des revendications précédentes,
comprenant en outre un système de capteur de positionnement (32) adapté pour déterminer périodiquement la position angulaire et/ou la vitesse angulaire d'au moins l'un des étages de compresseur (12, 14), de préférence de chaque étage de compresseur.

13. Moteur de propulsion à compresseur axial à étages multiples (10) selon l'une quelconque des revendications précédentes,
dans lequel au moins certaines des aubes (12a, 14a) d'au moins l'un des étages de compresseur (12, 14) sont pourvues de conduits d'air internes s'étendant vers un côté radialement extérieur.

14. Aéronef avec un fuselage et au moins une paire d'ailes, pourvu en outre d'au moins un moteur de propulsion à compresseur à étages multiples (10) selon l'une quelconque des revendications précédentes, dans lequel en particulier l'au moins un moteur de propulsion à compresseur à étages multiples est intégré à un élément de volet qui est assemblé de manière pivotante à l'une des ailes.
